# EUROPEAN PATENT SPECIFICATION

(11) **EP 0 771 418 B1**
(45) Date of publication and mention of the grant of the patent: **18.08.1999**
(21) Application number: 95925922.7
(22) Date of filing: 19.07.1995
(51) Int. Cl.: G01N 25/22, G01N 27/16

(54) **DEVICE AND METHOD FOR MEASURING REACTIVE COMPONENTS IN GASES**
GERÄT UND METHODE ZUR MESSUNG DER REAKTIONSFÄHIGEN KOMPONENTEN IN GASEN
DISPOSITIF ET PROCEDE DE MESURE DE COMPOSANTS REACTIFS DANS DES GAZ

(30) Priority: 19.07.1994 GB 9414582
(43) Date of publication of application: 07.05.1997
(73) Proprietor: EUROPEAN ATOMIC ENERGY COMMUNITY (EURATOM), 2920 Luxembourg (LU)
(72) Inventor: HEMMERICH, Johann, Ludwig, Oxford OX3 7RN (GB); MILVERTON, Paul, Oxon OX11 0EL (GB)
(74) Representative: Baldock, Sharon Claire
(86) International application number: GB9501707
(87) International publication number: WO9602826

(56) References cited:
- EP-A- 0 187 272
- GB-A- 1 358 368
- GB-A- 1 427 515
- US-A- 3 771 960
- US-A- 4 296 399
- US-A- 4 870 025

## Description

The invention relates to a device and method for detecting and for measuring the amount of a reactive gaseous component in a gas or in a mixture of two or more reactive gases. The device is useful particularly, but not exclusively, for the detection of potentially explosive gas mixtures. In some applications the action of the device may render "safe" a gas mixture which would otherwise be an explosive hazard.

In many industrial processes mixtures of gases need to be conveyed in which the components of the mixture are reactive with one another such that if the proportion of one of the components exceeds a certain threshold the mixture is liable to explode. This hazard is particularly great where the gas stream in question is subject to substantial pressure changes during its processing. Further, a gas stream may become subject, during processing, to the ingress of a contaminant reactive gas rendering the resultant mixture explosive. Thus there is a need for adequate detection and accurate measurement of a potentially explosive component in any mixture even where that component may be present at very low levels.

The present inventors have addressed the problem of detection and measurement of reactive components in relation to the processing of waste gases from a thermonuclear fusion reactor.

Thermonuclear fusion produces waste gas mixtures which include the hydrogen isotopes deuterium and tritium. Whilst in the actual reactor these gases are at very low pressures e.g. 10⁻⁵ to 10⁻¹ mbar, but are raised to higher pressures e.g. approximately lbar, in auxiliary gas purification and isotope separation systems. Such pressure changes expose the process to the risk of formation of explosive hydrogen/air mixtures by in-leakage of air in the low pressure section of the process loop and then subsequent compression to atmospheric pressure. Further, in this situation explosive destruction of the process loop is doubly hazardous because the gas mixture contains radioactive isotopes.

It is therefore desirable to be able to detect the presence of oxygen in hydrogen at a sufficiently low pressure to permit the implementation of safe purification and separation processes operating at higher pressures, for example using selective absorption of oxygen on molecular sieve at cryogenic operating temperatures. However, commercially available oxygen detectors are insufficiently sensitive to detect oxygen in an air/hydrogen mixture when the air concentration is 5%v/v or lower and the pressure is lower than about 10mbar. Further, experience in tritium laboratories has shown that such sensors, albeit working reasonably well in hydrogen at atmospheric pressure, deteriorate rapidly when exposed to tritium due to damage caused by its radioactive decay on plastic membranes used in such sensors for selective permeation of oxygen. Thus the sensors need to be replaced every 4 to 5 weeks which is a particularly undesirable situation for systems contaminated with tritium.

The present inventors have now developed a sensing and measuring device and method which is able to detect and measure small amounts of oxygen in hydrogen, deuterium and tritium or a mixture thereof when the gas is at very low pressure i.e. less than 10mbar. Thus, by using the device of the invention it can be predicted whether the gas mixture is potentially explosive before it is compressed for purification and separation.

The device and method of the invention rely for the measurement of the amount of the reactive component on the heat of reaction released or absorbed when said component reacts, under controlled conditions using a suitable catalyst, with another component in the mixture.

Thus in accordance with the first aspect of the invention there is provided a device for measuring the amount of any reactive gaseous component in a single gas or in a mixture of two or more gases, at least one of which reacts with said reactive component, the device comprising a reaction chamber for receipt of said gas or mixture of gases, means for supportinq a catalyst suitable for catalysing the reaction between said reactive component and said gas or gases at two locations within the reaction chamber and heat sensing means at each of said locations characterised in that at one of said locations the support includes a means which limits the gas exchange rate between the catalyst at that location and the gas whose reactive component is to be measured to 0.1 to 5% of the exchange rate at the other said location.

Preferably the heat sensors are positioned in the device so as to be immediately adjacent the catalysts when in place, so that in operation the sensors are in intimate thermal contact with the catalysts and can easily absorb any heat generated by the catalysed reaction. Suitable heat sensors are thermopiles which convert the heat generated or absorbed by the catalysed reaction into an electrical signal proportional to the heat of reaction and hence to the amount of reactive component. The signal is expressed digitally by a millivoltmeter connected to the thermopiles. Preferably the thermopiles are semi-conductor thermopiles such as peltier elements or thermoelectric heat pumps.

The receptacle which form the catalyst and thermopile supports may be at the bottom of the reaction chamber, for example formed from a suitable seal for the chamber such as a vacuum flange. The thermopiles may be disposed in a depression in the flange and the removable catalysts, which conveniently may be in granular or pellet form rest immediately thereabove. Wire mesh may cover the catalysts to prevent loss from the support. The catalysts are not chemically adhered to the thermopile heat sensors.

The reaction chamber preferably includes a separate inlet and outlet for the gas or mixture of gases to be tested. This allows the device to be used for batch testing of a gas mixture or for continuous monitoring of a gas stream. In either case it is preferable if the chamber includes a pressure gauge in order that the chamber may be filled with gas to a pre-determined pressure or blown through the chamber at a constant pressure.

The reaction chamber may be made of a variety of materials depending on the gases to be tested. Metal or ceramic materials are suitable as well as some plastics although these may need to be heat-resistant and/or radiation-resistant depending on the particular application.

The above device is suitable for the detection and measurement of small amounts of oxygen i.e. 5%v/v or less, in a hydrogen, deuterium or tritium stream over a range of pressures from (10 mbar to above atmospheric. It is also suitable for detection of small amounts of hydrogen in an oxygen stream. The device is sensitive enough to detect amounts of oxygen or hydrogen well below the explosive threshold. It can also be used for the detection of methane in air.

In all the above applications suitable catalysts to be included in the device are platinum or palladium "deoxo" catalyst, preferably supported on an alumina carrier. In the case of detecting methane in air the operating temperature needs to be about 350°C or higher whereas detection of oxygen in air can be carried out at room temperatures. However the standard catalyst mentioned above can deactivate when used at room temperature due to the catalyst surface becoming coated with the reaction product H₂O.
Therefore it is preferable to use a catalyst which has been "wet-proofed" by a proprietary process and can therefore operate at room temperature. Such a catalyst can be obtained from AECL Canada.

The above described embodiment of the invention has sufficient sensitivity that it is able to generate a signal of greater than 5mV for 4% air in hydrogen at 10mbar pressure.

In order to avoid sensitivity to ambient temperature fluctuations in the operation of the device, which distort the signals given from the thermopiles, it is preferable if the entire device is surrounded by an insulating housing. This then renders it suitable for use in systems where the majority gas constituent e.g. air, is not subjected to pressure changes which cause "undesirable" signals due to adsorption/desorption of gas on the catalyst surface.

In the case of detection and measurement of potentially explosive air/hydrogen or hydrogen isotope mixtures from a fusion reactor, the process stream is subjected to substantial pressure changes as aforementioned.

The aforesaid gas exchange rate is proportional to the area of the catalyst which is accessible to the gas. Thus the exchange rate is limited at one location by providing means to prevent all but 0.1 to 5%, preferably about 1%, of the catalyst surface being in contact with the gas to be tested. Conveniently, this means may be, for example, a foil cover with a small hole in it. However, any gas impermeable material would suffice.

The heat sensors at each of the catalyst locations can be thermopiles, particularly semi-conductor thermopiles such as peltier elements or thermoelectric heat pumps. Preferably the heat sensors are immediately adjacent the catalysts. In operation the output signals from the two heat sensors are electrically subtracted to cancel each other out. Thus in a situation where there is equal heat flow through both sensors the signal output from the device is zero. However when a catalysed reaction occurs in the gas mixture, the heat released or absorbed by the reaction causes an output signal which is proportional, not only to the gas exchange rate but also to the amount of the reactive component in the mixture. The catalyst at the location which is fully in contact with the incoming gas mixture is described as the "main" catalyst while the catalyst which has a large proportion of its surface area blocked from the incoming gas is called the "reference" catalyst.

In a device in accordance with this first aspect of the invention, called a "differential" device, the catalyst and heat sensors may be supported on a vertically disposed block of good thermal conductivity, such as, for example, aluminium or copper. The vertical block may support the heat sensors in receptacles, i.e. depressions or hollows in each side of the block. The catalyst may be placed immediately adjacent the heat sensors within the receptacles, with means provided, for example, wire mesh, to retain the catalyst in place. The vertical block is arranged to protrude into a reaction chamber to dispose the catalyst and heat sensors therein.

In an alternative the main catalyst and heat sensor and reference catalyst and heat sensor may be positioned at the bottom of a reaction chamber. For example, each heat sensor can be sunk into hollows forming receptacles in a standard vacuum flange sealing the bottom of the reaction vessel. The catalysts may then rest on top of these sensors, the main catalyst simply being covered with wire mesh to retain it in place while the reference catalyst has a gas impermeable cover such as foil with a small hole in it to expose only 0.1 to 5% of the catalyst to the gas.

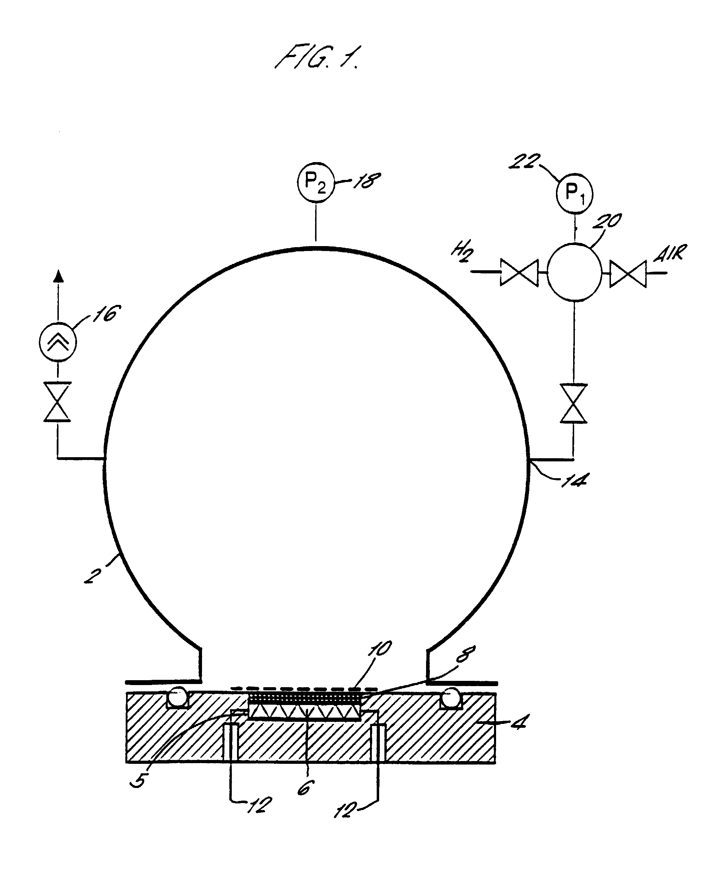

With the differential device false results which may arise with the non-differential device of Figure 1 are completely avoided. It shows no signal due to ambient temperature fluctuations because both heat sensors are subject to the same fluctuations and the signals cancel each other out. Adsorption/desorption heat effects also cancel each other out as in both cases the catalyst volume is filled (or emptied) with the majority gas component much faster than the thermal response time constant of the sensors. The minority gas component (e.g. oxygen) is admitted by diffusion to the reference catalyst/sensor at only about 1% of the rate as compared to the main sensor.

The differential device as described above therefore has 99% of the sensitivity of the absolute sensor which is the first embodiment of the invention but can nevertheless detect 1 ppm O₂ in H₂ or 1 ppm H₂ in air, well below the explosive threshold, giving readings of 3.2 µV and 2.9µV respectively. The device is also suitable for detecting methane in air and in all applications is capable to determining a reactive minority component in a gas mixture at pressures of lbar or less, preferable 10mbar or less, for example lmbar.

In its second aspect the invention comprises a method for measuring the amount of any reactive gaseous component in a single gas or in a mixture of two or more gases, at least one of which reacts with said reactive component which comprises the steps of:-
(a) contacting said gas or mixture of gases with a catalyst suitable for catalysing the reaction between said reactive component and the gas or one or more gases in the mixture, in a device in accordance with the first aspect of the invention
(b) detecting and measuring the heat generated or absorbed by said catalysed reaction which is proportional to the amount of reactive component, and
(c) converting the amount of heat generated or absorbed into an electrical signal.

According to the above method a differential device as described above is used and the gas or mixture of gases to be tested is brought into full contact with catalyst at one location but substantially blocked from contact with the catalyst at a second location except for a small proportion of the catalyst area. The signals from the heat sensors adjacent the catalysts at the two locations are arranged to cancel each other out so that the only variable between the two catalysts is the degree of exposure to any chemical reaction. Measurement of the signal therefore provides an indication of the amount of reactive component.

In accordance with a third aspect the invention provides a method for measuring the amount of a reactive gaseous component in a single gas or a mixture of two or more gases, at least one of which reacts with said reactive component which comprises the steps of:
(a) providing a catalyst suitable for catalysing the reaction between said reactive component and said gas or gases at two separate locations within a reaction chamber for contact with the gas to be tested,
(b) providing means which limit the gas exchange rate between the catalyst at one of said locations and the gas whose reactive component is to be measured to 0.1 to 5% of the exchange rate at the other said location,
(c) providing immediately adjacent each catalyst location a heat sensor,
(d) electrically subtracting the signals from the respective heat sensors to cancel each other out,
(e) introducing the gas to be tested into the environment of said two catalyst locations, and
(f) detecting any signal from the heat sensors which is proportional to the amount of reactive component in the mixture.

It will be appreciated that since the device and methods of the invention described herein facilitate a catalytic reaction between the reactive component in a gas or mixture of gases and another gas in the mixture, once passed through the device the reactive or explosive component may be effectively removed rendering the gas or mixture of gases "safe".

In practice whether all of the reactive component is in fact reacted depends upon the residence time of the gas within the device. The reaction will be completed when the signal from the thermopile is zero. It may or may not always be desirable to remove all the reactive component by catalytic reaction. For example, in the case of processing tritium waste from a nuclear fusion reactor, the biological radiation hazard from tritiated water (HTO), which is the reaction product, is about 10,000 times higher than that of tritium gas (HT) of equal activity. In this special case it is preferable to remove the unwanted component from HT gas, without reacting it to HTO, for example by selective adsorption of air on molecular sieves at cryogenic temperatures.

It will be appreciated that although the devices described above include a reaction chamber in which the catalysed reaction can take place, the heat sensor or sensors and catalysts are all that are essential for performing the invention.

The invention will now be described by way of example with reference to the accompanying drawings in which:-
Figure 1 shows a device which does not form part of the invention since it comprises only one support for supporting a catalyst and one heat sensor,
Figure 2 shows a device in accordance with the first aspect of the invention,
Figure 3 shows an alternative embodiment for the catalyst support in accordance with the first aspect of the invention,
Figure 4 shows the variation in the electrical signal (mV) with pressure in the reaction chamber (mbar) for hydrogen/air mixtures where the percentage air is 1%, 2% and 4% respectively,
Figure 5 shows the variation in electrical signal (mV) with pressure (mbar) in the reaction chamber for hydrogen/air mixtures where the percentage air is 0.19, 0.38 and 0.77% respectively,
Figure 6 shows the variation in electrical signal (mV) with pressure (mbar) in the reaction chamber for mixtures for air/hydrogen mixtures where the percentage air is 0.50, 0.99, 1.96 and 3.85% respectively, and
Figure 7 shows the variation in µV/ppm with pressure (mbar) (averaged values) for H₂ in air and O₂ in H₂ at very low concentrations ((5%).

The device of Figure 1 comprises a spherical reaction chamber 2 sealed at the base with a vacuum flange 4. The flange is shaped to form a hollow to act as a receptacle 5 in which is embedded a thermopile 6. The upper surface of the thermopile 6 is covered, when the device is in operation, with catalyst 8 which is maintained in position by a wire mesh 10. The thermopile output 12 is connected to a suitable mV-meter (not shown). The reaction chamber 2 has an inlet 14 for the gas to be tested and an outlet 16 and conveniently includes a pressure gauge 22 to monitor the pressure of the reacting gas within the chamber. For the purposes of calibration of the device a mixing chamber 20 may be included in which gases having a pre-determined concentration of reactive component are mixed and their pressure measured by gauge 22.

The device of Figure 1 may be surrounded by an insulating housing (not shown) and it is then suitable for testing process gases where there is minimal pressure variation.

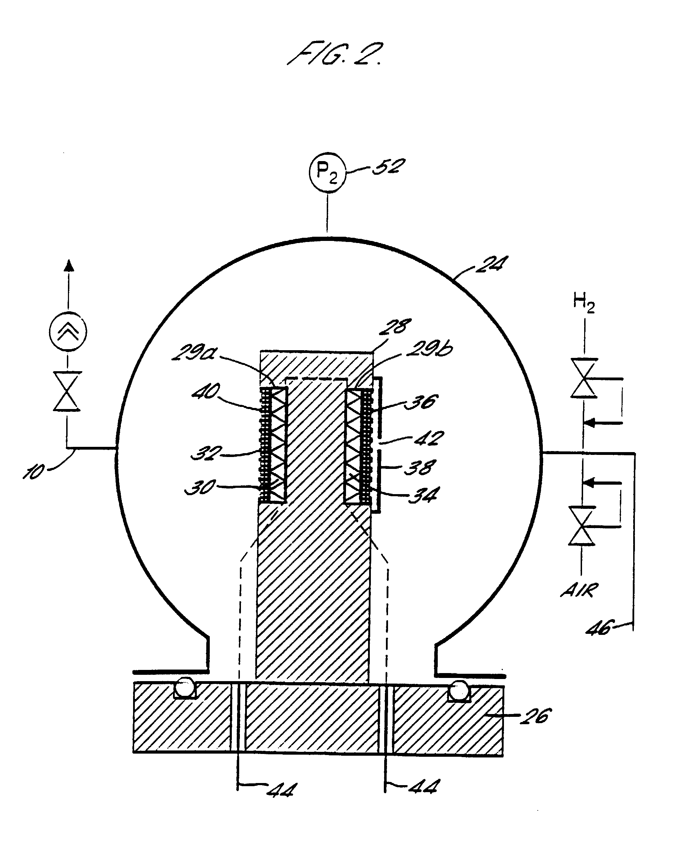

A decive according to the invention is shown in Figure 2 and comprises a similar spherical reaction chamber 24 sealed at the base with a vacuum flange 26. An aluminium block 28 in the form of a column is disposed within the chamber 24 and is provided with two recesses 29a and 29b which provide support for a main thermopile 30, a main catalyst 32, a reference thermopile 34 and a reference catalyst 36. The catalysts 32 and 36 are retained in position by wire mesh 40. The reference catalyst and sensor 34,36 are covered by a gas impermeable material e.g metal foil 38 with a small hole 42. The hole admits direct exchange with the ambient gas mixture for only about 1% of the catalyst surface area. The outputs 44 from the main thermopile 30 and the reference thermopile 34 are connected to a mV-meter (not shown). The reaction chamber includes an inlet 46 for the gas to be tested and an outlet 50 as well as a pressure gauge for the chamber 52.

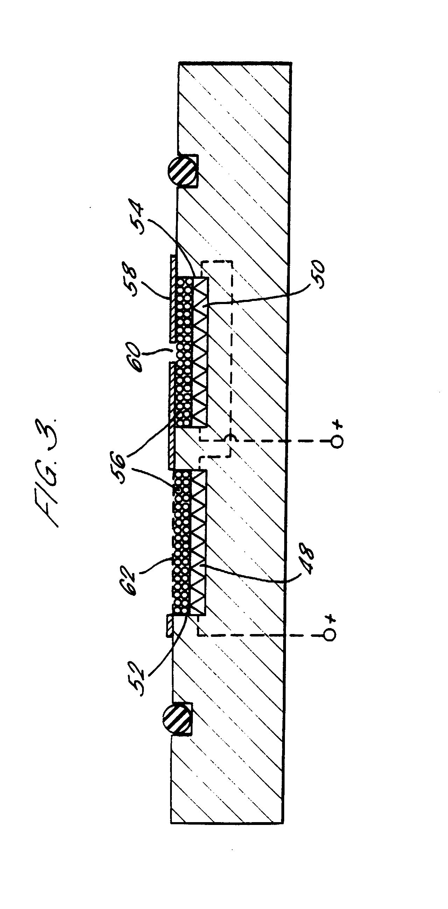

An alternative arrangement for the main catalyst and reference catalyst is shown in Figure 3. In this embodiment the main and reference thermopiles 48 and 50 are each disposed in recesses 52 and 54 respectively in a standard vacuum flange fitted in the base of the reaction chamber as in Figure 1. Catalyst 56 is placed on top of each of the thermopiles 48 and 52. The catalyst on top of the thermopile 48 is retained in position with wire mesh 62. The catalyst on top of the thermopile 50 is overlayed with a gas impermeable material e.g. metal foil 58. The foil is punctured with a small hole 60 which exposes about 1% of the catalyst surface to the gas in the reaction chamber.

In the device of Figure 2 or Figure 3 the signals from the two thermopiles cancel each other out with respect to all variables to which both are exposed. However, the minority gas component which is to be measured is admitted by diffusion to the reference catalyst 36 only at 1% of the rate compared with the main catalyst 32. Thus the signal given corresponds to the heat absorbed or generated by the reaction.

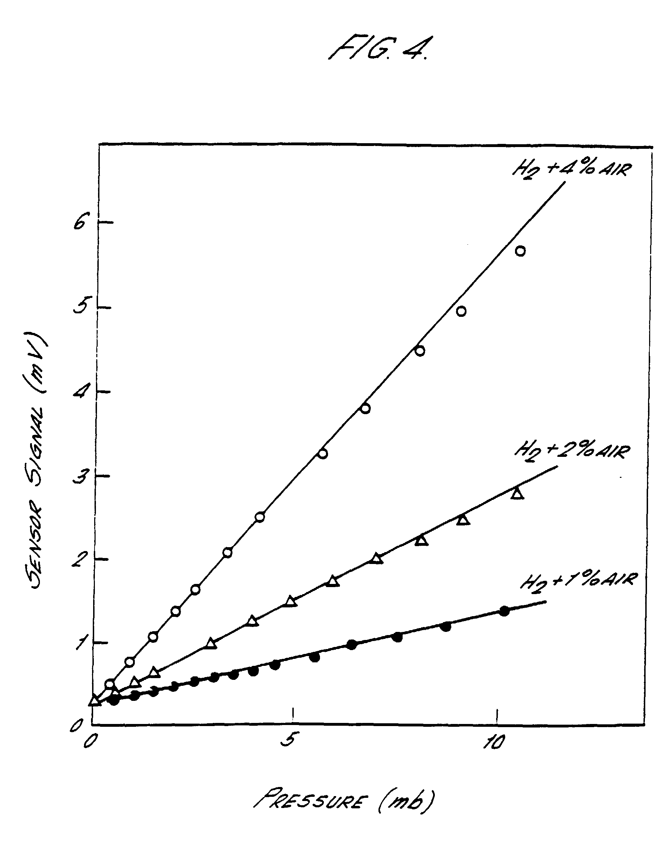

The device according to Figure 2 has been tested using a continuous flow of gas mixture obtained through individual mass flow controllers for hydrogen and for air, the pressure in the test vessel measured by the pressure gauge, being adjusted via a throttle valve in series with a vacuum pump. Results for a series of signal measurements in mV vs pressure for air concentrations of 1%, 2% and 4% air in hydrogen respectively are shown in Figure 4. The slight deviation from linearity is due to the fact that the oxygen removal rate by the catalyst is not fully negligible with respect to the sample gas volume flow rate during the test. The data presented are consistent with an effective "oxygen pumping speed" of the device of ~ 0.051/s whereas the volume flow rate of the mixture varied from 7.2 l/s (at low pressure) to ~ 1l/s (at 10mbar) leading to an effective oxygen depletion ranging from ~ 0.7% at low pressure to - 5% at high pressure (the percentages referring to the absolute oxygen concentration in each case). This minor side effect, however, can be safely neglected in a typical large fusion gas processing system with volume flows in excess of 1000 l/s at lmbar pressure.

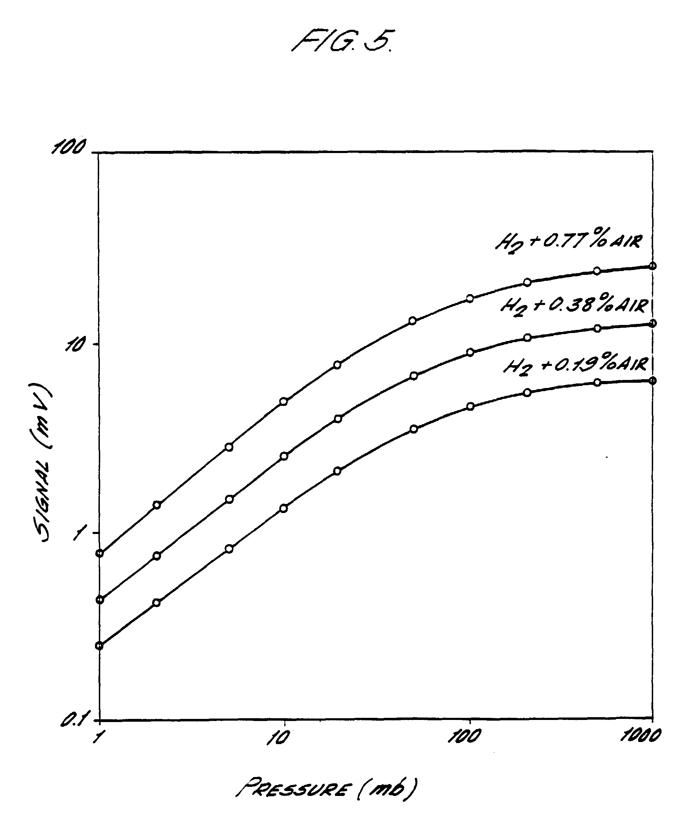

The results shown in Figures 5, 6 and 7 were generated as described above. In Figure 5 the ability of the device to detect and measure air in hydrogen at as low as 0.19% is demonstrated, the lack of linearity being for the same reasons as set forth above. The sensitivity of the device at 1 bar absolute pressure is 3.2 µV/ppm oxygen.

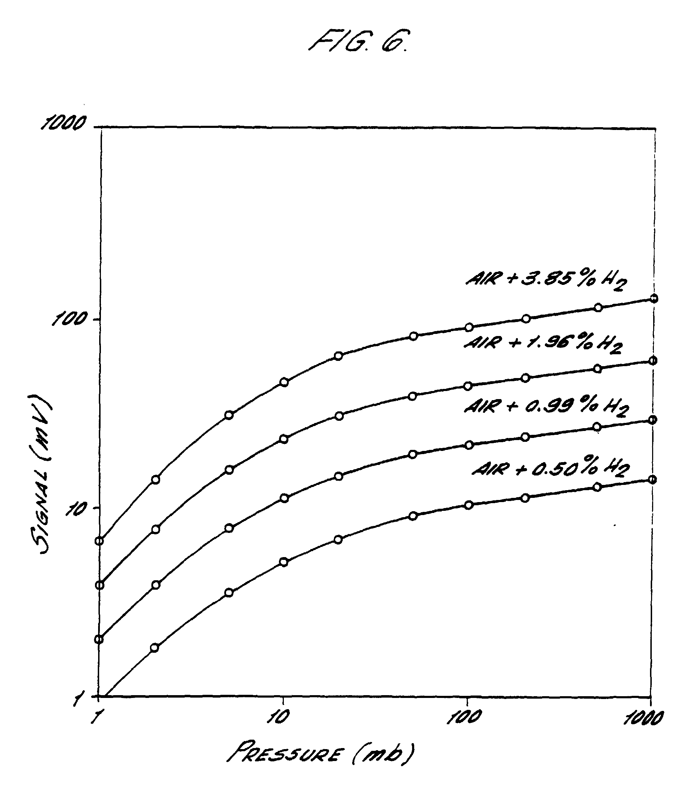

Figure 6 shows the results of a test in which air is the majority gas in the mixture and hydrogen is included at 0.50, 0.99, 1.96 and 3.85% respectively. The sensitivity of the device at lbar pressure is 2.9 µV ppm hydrogen.

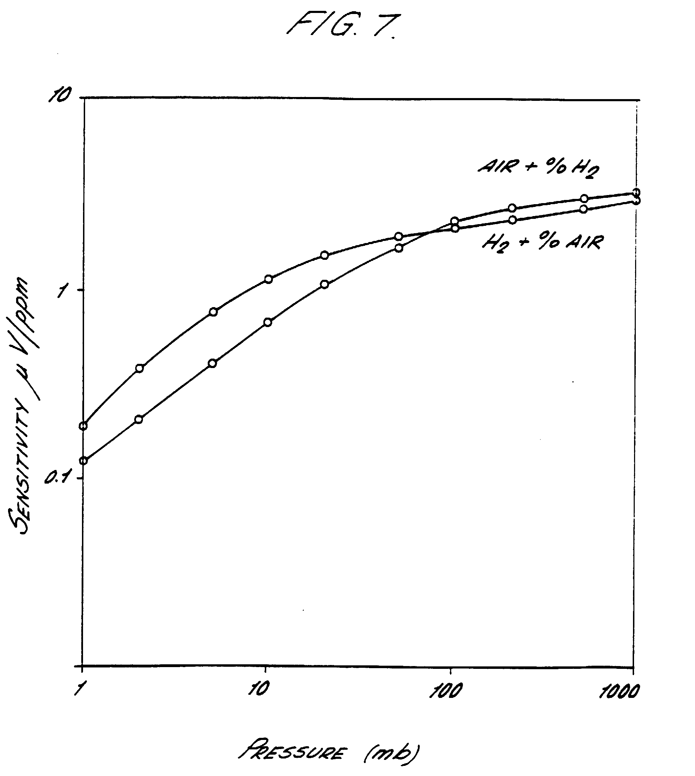

Figure 7 shows the averaged values of Figures 3, 4 and 6 for air in hydrogen and hydrogen in air.

## Claims

1. A device for measuring the amount of any reactive gaseous component in a single gas or in a mixture of two or more gases, at least one of which reacts with said reactive component, which device comprises a reaction chamber (24) for receipt of said gas or mixture of gases, means (28) for supporting a catalyst (32, 36) suitable for catalysing the reaction between said reactive component and said gas or gases at two locations within the reaction chamber and heat sensing means (30, 34) at each of said locations, characterised in that at one of said locations the support includes a means which limits the gas exchange rate between the catalyst at that location and the gas whose reactive component is to be measured to 0.1 to 5% of the exchange rate at the other said location.

2. A device as claimed in claim 1 characterised in that said means at the one said location limits the gas exchange rate to 1% of the exchange rate at the other said location.

3. A device as claimed in claim 1 characterised in that the heat sensor (34, 36) converts the heat of reaction into an electrical signal.

4. A device as claimed in any of claims 1 or claim 3 characterised in that the signals from the two heat sensors (30, 34) can be electrically subtracted to cancel each other out in the absence of a catalysed reaction between said reactive component and one or more other gases.

5. A device as claimed in any one of claims 1 to 4 characterised in that the two locations for supporting the catalyst are borne on a column of metal (28) protruding into the reaction chamber (24).

6. A device according to claim 5 wherein said column is shaped to form a receptacle (29) for holding the catalyst.

7. A device as claimed in claim 5 characterised in that said column (28) is copper or aluminium.

8. A device as claimed in any preceding claim characterised in that said heat sensor (30, 34) is a semi-conductor thermopile such as a peltier element or thermoelectric heat pump.

9. A device as claimed in any preceding claim characterised in that a catalyst is disposed in the catalyst support means (29).

10. A device as claimed in any preceding claim characterised in that the said reaction chamber 24 is metal, a ceramic material or a radiation or heat-resistant plastic.

11. A device as claimed in any preceding claim characterised in that it includes means to fill the chamber with the gas to be tested to a predetermined pressure (52).

12. A device as claimed in any preceding claim characterised in that it is adapted for the detection of oxygen in a gas stream of hydrogen, deuterium or tritium or a mixture of two or more thereof.

13. A device as claimed in any one of claims 1 to 12 characterised in that it is adapted for the detection of hydrogen, deuterium or tritium or a mixture thereof in a gas stream of oxygen or air.

14. A device as claimed in claim 12 or claim 13 characterised in that it is adapted to operate at gas pressures of lbar or less, preferably less than 10mbar.

15. A method for measuring the amount of a reactive gaseous component in a single gas or a mixture of two or more gases at least one of which reacts with said reactive component which method comprises the steps of:-
(a) contacting said gas or mixture of gases with a catalyst (32, 36) suitable for catalysing the reaction between said reactive component and one or more other gases in the mixture, in a device as claimed in any one of claims 1 to 14,
(b) detecting and measuring the heat generated or absorbed by said catalysed reaction which is proportional to the amount of reactive component, and
(c) converting the amount of heat generated or absorbed into an electrical signal.

16. A method as claimed in claim 15 characterised in that said gas is hydrogen, deuterium or tritium or a mixture of two or more thereof and the reactive component to be detected is oxygen.

17. A method as claimed in claim 15 characterised in that said gas is oxygen or air and said reactive component to be detected is hydrogen, deuterium or tritium or a mixture of two or more thereof.

18. A method as claimed in claim 15 characterised in that said gas mixture is air and the reactive component to be detected is methane.

19. A method as claimed in any one of claims 16 to 18 characterised in that said catalyst is a platinum or palladium "deoxo" catalyst optionally on an alumina carrier.

20. A method for measuring the amount of a reactive gaseous component in a single gas or a mixture of two or more gases at least one of which reacts with said reactive component which method comprises the steps of:
(a) providing a catalyst (32, 36) suitable for catalysing the reaction between said reactive component and said gas or gases at two separate locations within a reaction chamber (24) for contact with the gas to be tested,
(b) providing means which limit the gas exchange rate between the catalyst at one of said locations (38) and the gas whose reactive component is to be measured to 0.1 to 5% of the exchange rate at the other said location,
(c) providing immediately adjacent each catalyst location a heat sensor (30, 34),
(d) electrically subtracting the signals from the respective heat sensors (30, 34) to cancel each other out,
(e) introducing the gas to be tested into the environment of said two catalyst locations, and
(f) detecting any signal from the heat sensors (30, 34) which is proportional to the amount of reactive component in the mixture.

21. A method as claimed in claim 20 characterised in that said gas is hydrogen, deuterium or tritium or a mixture of two or more thereof and the reactive component to be detected is oxygen.

22. A method as claimed in claim 20 characterised in that said gas is oxygen or air and said reactive component to be detected is hydrogen, deuterium or tritium or a mixture of two or more thereof.

23. A method as claimed in claim 20 characterised in that said gas mixture is air and the reactive component to be detected is methane.

24. A method as claimed in any one of claims 21 to 23 characterised in that said catalyst is a platinum or palladium "deoxo" catalyst optionally on an alumina carrier.

25. A method as claimed in any one of claims 15 to 24 characterised in that the gas or mixture of gases to be tested is brought into contact with the catalyst at a pressure of less than lbar, preferably less than 10mbar.

## Patentansprüche

1. Vorrichtung zum Messen der Menge einer reaktionfähigen Gaskomponente in einem Gas oder in einer Mischung aus zwei oder mehreren Gasen, von denen mindestens eines mit der reaktionsfähigen Komponente reagiert, wobei die Vorrichtung eine Reaktionskammer (24) zur Aufnahme des Gases oder der Gasmischung aufweist, eine Einrichtung (28) zum Tragen eines Katalysators (32, 36), der zur Katalyse der Reaktion zwischen der reaktionsfähigen Komponente und dem Gas oder den Gasen geeignet ist, an zwei Stellen innerhalb der Reaktionskammer, und Wärmemesser (30, 34) an jeder dieser Stellen, dadurch gekennzeichnet, daß an einer der Stellen der Träger Mittel aufweist, die die Gasaustauschgeschwindigkeit zwischen dem Katalysator an dieser Stelle und dem Gas, dessen reaktionsfähige Komponente gemessen werden soll, auf 0,1 bis 5 % der Austauschgeschwindigkeit an der anderen Stelle beschränkt.

2. Vorrichtung nach Anspruch 1, dadurch gekennzeichnet, daß das Mittel an dieser Stelle die Gasaustauschgeschwindigkeit auf 1 % der Austauschgeschwindigkeit an der anderen Stelle beschränkt.

3. Vorrichtung nach Anspruch 1, dadurch gekennzeichnet, daß der Wärmemesser (34, 36) die Reaktionswärme in ein elektrisches Signal umwandelt.

4. Vorrichtung nach Anspruch 1 oder 3, dadurch gekennzeichnet, daß die Signale von den zwei Wärmemessern (30, 34) elektrisch substrahiert werden können, um sich in Abwesenheit einer katalysierten Reaktion zwischen der reaktionsfähigen Komponente und einem oder mehreren Gasen gegenseitig zu löschen.

5. Vorrichung nach einem der Ansprüche 1 bis 4, dadurch gekennzeichnet, daß die zwei Stellen zum Tragen des Katalysators sich auf einer Metallsäule (28) befinden, die in die Reaktionskammer (24) hineinragt.

6. Vorrichtung nach Anspruch 5, dadurch gekennzeichnet, daß die Säule so ausgebildet ist, daß sie ein Gefäß (29) zur Aufnahme des Katalysators bildet.

7. Vorrichtung nach Anspruch 5, dadurch gekennzeichnet, daß die Säule (28) aus Kupfer oder Aluminium besteht.

8. Vorrichtung nach einem der vorherigen Ansprüche, dadurch gekennzeichnet, daß der Wärmemesser (30, 34) eine Halbleiter-Thermosäule, wie z. B. ein Pelletier-Element oder eine thermoelektrische Wärmepumpe, ist.

9. Vorrichtung nach einem der vorherigen Ansprüche, dadurch gekennzeichnet, daß der Katalysator in der Katalysatorträgereinrichung (29) vorgesehen ist.

10. Vorrichtung nach einem der vorherigen Ansprüche, dadurch gekennzeichnet, daß die Reaktionskammer (24) aus Metall, einem Keramikmaterial oder einem gegen Strahlung oder Wärme beständigen Kunststoff besteht.

11. Vorrichtung nach einem der vorherigen Ansprüche, dadurch gekennzeichnet, daß sie eine Einrichtung zum Füllen der Kammer mit dem zu testenden Gas bis zu einem bestimmten Druck (52) aufweist.

12. Vorrichtung nach einem der vorherigen Ansprüche, dadurch gekennzeichnet, daß sie ausgestaltet ist zur Bestimmung von Sauerstoff in einem Gasstrom aus Wasserstoff, Deuterium oder Tritium, oder einer Mischung von zwei oder mehreren davon.

13. Vorrichtung nach einem der Ansprüche 1 bis 12, dadurch gekennzeichnet, daß sie ausgestaltet ist zur Bestimmung von Wasserstoff, Deuterium oder Tritium oder einer Mischung davon in einem Gasstrom aus Sauerstoff oder Luft.

14. Vorrichtung nach Anspruch 12 oder 13, dadurch gekennzeichnet, daß sie ausgestaltet ist, um bei Gasdrucken von 1 bar oder weniger, und vorzugsweise von weniger als 10 mbar betrieben zu werden.

15. Verfahren zum Messen der Menge einer reaktionsfähigen Gaskomponente in einem Gas oder einer Mischung aus zwei oder mehreren Gasen, von denen mindestens eines mit der reaktionsfähigen Komponente reagiert, dadurch gekennzeichnet, daß das Verfahren die Stufen umfaßt:
a) in-Kontakt-bringen des Gases oder der Gasmischung mit einem Katalysator (32, 36), der zur Katalyse der Reaktion zwischen der reaktionsfähigen Komponente und einem oder mehreren anderen Gasen in der Mischung geeignet ist, in einer in einem der Ansprüche 1 bis 14 beanspruchten Vorrichtung,
b) Bestimmen und Messen der durch die katalysierte Reaktion gebildeten oder verbrauchten Wärme, die proportional zur Menge der reaktionsfähigen Komponente ist, und
c) Umwandeln der Menge der gebildeten oder verbrauchten Wärme in ein elektrisches Signal.

16. Verfahren nach Anspruch 15, dadurch gekennzeichnet, daß das Gas Wasserstoff, Deuterium oder Tritium oder eine Mischung von zwei oder mehreren davon ist, und die zu bestimmende reaktionsfähige Komponente Sauerstoff ist.

17. Verfahren nach Anspruch 15, dadurch gekennzeichnet, daß das Gas Sauerstoff oder Luft ist, und die zu besitmmende reaktionsfähige Komponente Wasserstoff, Deuterium oder Tritium oder eine Mischung von zwei oder mehreren davon ist.

18. Verfahren nach Anspruch 15, dadurch gekennzeichnet, daß die Gasmischung Luft ist und die zu bestimmende reaktionfähige Komponente Methan ist.

19. Verfahren nach einem der Ansprüche 16 bis 18, dadurch gekennzeichnet, daß der Katalysator ein Platin- oder Palladium-"Deoxo"-Katalysator ist, der sich gegebenenfalls auf einem Aluminiumoxid-Träger befindet.

20. Verfahren zum Messen der Menge einer reaktionfähigen Gaskomponente in einem Gas oder einer Mischung aus zwei oder mehreren Gasen, von denen mindestens eines mit der reaktionsfähigen Komponente reagiert, dadurch gekennzeichnet, daß das Verfahren die Stufen umfaßt:
a) Bereitstellen eines Katalysators (32, 36) der zur Katalyse der Reaktion zwischen der reaktionsfähigen Komponente und dem Gas oder den Gasen geeignet ist, an zwei getrennten Stellen innerhalb einer Reaktionskammer (24) zum in Kontakt bringen mit dem zu bestimmenden Gas,
b) Bereitstellen eines Mittels, das die Gasaustauschgeschwindigkeit zwischen dam Katalysator an einer der Stellen (38) und dem Gas, dessen reaktionsfähige Komponente gemessen werden soll, auf 0,1 bis 5 % der Austauschgeschwindigkeit an der anderen Stelle beschränkt
c) Bereitstellen eines Wäremmessers (30, 34) unmittelbar neben jeder Katalysator-Stelle
d) elektrisches Substrahieren der Signale von den jeweiligen Wärmemessern (30, 34), um sich gegenseitig auszulöschen,
e) Einführen des zu bestimmenden Gases in die Umgebung der zwei Katalysator-Stellen, und
f) Bestimmen eines Signals von den Wärmemessern (30, 34), das proportional ist zur Menge der reaktionfähigen Komponente in der Mischung.

21. Verfahren nach Anspruch 20, dadurch gekennzeichnet, daß das Gas Wasserstoff, Deuterium oder Tritium oder einer Mischung von zwei oder mehreren davon ist, und die zu bestimmende reaktionsfähige Komponente Sauerstoff ist.

22. Verfahren nach Anspruch 20, dadurch gekennzeichnet, daß das Gas Sauerstoff oder Luft ist, und die zu bestimmende reaktionsfähige Komponente Wasserstoff, Deuterium oder Tritium oder eine Mischung aus zwei oder mehreren davon ist.

23. Verfahren nach Anspruch 20, dadurch gekennzeichnet, daß die Gasmischung Luft ist und die zu bestimmende reaktionsfähige Komponente Methan ist.

24. Verfahren nach einem der Ansprüche 21 bis 23, dadurch gekennzeichnet, daß der Katalysator ein Platin- oder Palladium-"Deoxo"-Katalysator ist, der sich gegebenenfalls auf einem Aluminiumoxid-Träger befindet.

25. Vefahren nach einen der Ansprüche 15 bis 24, dadurch gekenneichnet, daß das zu bestimmende Gas oder die Gasmischung mit dem Katalysator bei einem Druck von weniger als 1 bar, vorzugsweise weniger als 10 mbar, in Kontakt gebracht wird.

## Revendications

1. Dispositif de mesure de la quantité d'un composant gazeux réactif quelconque dans un gaz simple ou dans un mélange de deux ou plusieurs gaz dont l'un au moins réagit avec ledit composant réactif, lequel dispositif comprend une chambre de réaction (24) destinée à recevoir ledit gaz ou mélange de gaz, des moyens (28) pour supporter un catalyseur (32, 36) approprié pour catalyser la réaction entre ledit composant réactif et ledit gaz ou mélange de gaz à deux emplacements à l'intérieur de la chambre de réaction et des moyens de détection de chaleur (30, 34) à chacun desdits emplacements, caractérisé en ce que, à l'un desdits emplacements, le support comprend un moyen qui limite le taux d'échange gazeux entre le catalyseur à cet emplacement et le gaz dont on veut mesurer le composant réactif à 0,1 à 5 % du taux d'échange audit autre emplacement.

2. Dispositif selon la revendication 2, caractérisé en ce que ledit moyen audit premier emplacement limite le taux d'échange gazeux à 1 % du taux d'échange audit autre emplacement.

3. Dispositif selon la revendication 1, caractérisé en ce que le capteur de chaleur (34, 36) convertit la chaleur de la réaction en un signal électrique.

4. Dispositif selon l'une quelconque des revendications 1 ou 3, caractérisé en ce que les signaux provenant des deux capteurs de chaleur (30, 34) peuvent être soustraits électriquement afin de s'annuler l'un l'autre en l'absence de réaction catalysée entre ledit composant réactif et un ou plusieurs autres gaz.

5. Dispositif selon l'une quelconque des revendications 1 à 4, caractérisé en ce que les deux emplacements de supportage du catalyseur sont portés sur une colonne de métal (28) dépassant dans la chambre de réaction (24).

6. Dispositif selon la revendication 5, dans lequel ladite colonne est profilée en forme de réceptacle (29) afin de maintenir le catalyseur.

7. Dispositif selon la revendication 5, caractérisé en ce que ladite colonne (28) est en cuivre ou en aluminium.

8. Dispositif selon l'une quelconque des revendications précédentes, caractérisé en ce que ledit capteur de chaleur (30, 34) est une thermopile à semiconducteur telle qu'un élément à effet Peltier ou une pompe à chaleur thermoélectrique.

9. Dispositif selon l'une quelconque des revendications précédentes, caractérisé en ce qu'un catalyseur est disposé dans les moyens de supportage du catalyseur (29).

10. Dispositif selon l'une quelconque des revendications précédentes, caractérisé en ce que ladite chambre de réaction (24) est en métal, en matériau céramique ou en plastique résistant au rayonnement ou à la chaleur.

11. Dispositif selon l'une quelconque des revendications précédentes, caractérisé en ce qu'il comprend des moyens pour remplir la chambre avec le gaz à tester à une pression prédéterminée (52).

12. Dispositif selon l'une quelconque des revendications précédentes, caractérisé en ce qu'il est adapté pour la détection de l'oxygène dans un courant gazeux d'hydrogène, de deutérium ou de tritium, ou d'un mélange de deux ou plusieurs de ceux-ci.

13. Dispositif selon l'une quelconque des revendications 1 à 12, caractérisé en ce qu'il est adapté pour la détection de l'hydrogène, du deutérium ou du tritium, ou d'un mélange de ceux-ci, dans un courant gazeux d'oxygène ou d'air.

14. Dispositif selon la revendication 12 ou la revendication 13, caractérisé en ce qu'il est adapté pour fonctionner à des pressions de gaz de 1 bar ou moins, de préférence inférieures à 10 mbar.

15. Procédé de mesure de la quantité d'un composant gazeux réactif quelconque dans un gaz simple ou dans un mélange de deux ou plusieurs gaz dont l'un au moins réagit avec ledit composant réactif, ledit procédé comprenant les étapes consistant à :
(a) mettre ledit gaz ou mélange de gaz en contact avec un catalyseur (32, 36) approprié pour catalyser la réaction entre ledit composant réactif et un ou plusieurs autres gaz dans le mélange, dans un dispositif selon l'une quelconque des revendications 1 à 14 ;
(b) détecter et mesurer la chaleur générée ou absorbée par ladite réaction catalysée, qui est proportionnelle à la quantité du composant réactif ; et
(c) convertir la quantité de chaleur générée ou absorbée en un signal électrique.

16. Procédé selon la revendication 15, caractérisé en ce que ledit gaz est l'hydrogène, le deutérium ou le tritium, ou un mélange de deux ou plusieurs de ceux-ci, et le composant réactif à détecter est l'oxygène.

17. Procédé selon la revendication 15, caractérisé en ce que ledit gaz est l'oxygène ou l'air et ledit composant réactif à détecter est l'hydrogène, le deutérium ou le tritium, ou un mélange de deux ou plusieurs de ceux-ci.

18. Procédé selon la revendication 15, caractérisé en ce que ledit mélange de gaz est l'air et le composant réactif à détecter est le méthane.

19. Procédé selon l'une quelconque des revendications 16 à 18, caractérisé en ce que ledit catalyseur est un catalyseur "désoxo" au platine ou au palladium, le cas échéant sur un substrat en alumine.

20. Procédé de mesure de la quantité d'un composant gazeux réactif quelconque dans un gaz simple ou dans un mélange de deux ou plusieurs gaz dont l'un au moins réagit avec ledit composant réactif, ledit procédé comprenant les étapes consistant à :
(a) introduire un catalyseur (32, 36) approprié pour catalyser la réaction entre ledit composant réactif et ledit gaz ou mélange de gaz à deux emplacements séparés dans une chambre de réaction (24) afin de le mettre en contact avec le gaz à tester ;
(b) fournir des moyens limitant le taux d'échange gazeux entre le catalyseur à l'un desdits emplacements (38) et le gaz dont on veut mesurer le composant réactif à 0,1 à 5 % du taux d'échange audit autre emplacement ;
(c) fournir un capteur de chaleur (30, 34) au voisinage immédiat de chaque emplacement de catalyseur ;
(d) soustraire électriquement les signaux des capteurs de chaleurs (30, 34) respectifs afin qu'ils s'annulent l'un l'autre ;
(e) introduire le gaz à tester dans l'environnement desdits deux emplacements de catalyseur ; et
(f) détecter tout signal provenant des capteurs de chaleur (30, 34), qui est proportionnel à la quantité de composant réactif dans le mélange.

21. Procédé selon la revendication 20, caractérisé en ce que ledit gaz est l'hydrogène, le deutérium ou le tritium, ou un mélange de deux ou plusieurs de ceux-ci, et le composant réactif à détecter est l'oxygène.

22. Procédé selon la revendication 20, caractérisé en ce que ledit gaz est l'oxygène ou l'air et le composant réactif à détecter est l'hydrogène, le deutérium ou le tritium, ou un mélange de deux ou plusieurs de ceux-ci.

23. Procédé selon la revendication 20, caractérisé en ce que ledit mélange de gaz est l'air et le composant réactif à détecter est le méthane.

24. Procédé selon l'une quelconque des revendications 21 à 23, caractérisé en ce que ledit catalyseur est un catalyseur "désoxo" au platine ou au palladium, le cas échéant sur un substrat en alumine.

25. Procédé selon l'une quelconque des revendications 15 à 24, caractérisé en ce que le gaz ou le mélange de gaz à tester est mis en contact avec le catalyseur à une pression inférieure à 1 bar, de préférence inférieure à 10 mbar.
